# EUROPEAN PATENT APPLICATION

(11) **EP 4 745 868 A1**
(43) Date of publication of application: **20.05.2026**
(21) Application number: 24861703.7
(22) Date of filing: 22.07.2024
(51) Int. Cl.: G06Q 30/0242

(54) **DISPLAY METHOD FOR SEARCH ENGINE ADVERTISING, AND RELATED APPARATUS**

(30) Priority: 04.09.2023 CN 202311137437
(71) Applicant: Huawei Technologies Co., Ltd., Shenzhen, Guangdong 518129 (CN)
(72) Inventor: DUANMU, Mingxing, Shenzhen, Guangdong 518129 (CN); WANG, Yue, Shenzhen, Guangdong 518129 (CN); ZHONG, Weicai, Shenzhen, Guangdong 518129 (CN)
(74) Representative: Körber, Martin Hans
(86) International application number: PCT/CN2024/106838
(87) International publication number: WO 2025/050858

(57) **Abstract**

This application provides a method for displaying search engine advertising and a related apparatus, and is applied to a terminal device or a server. The method includes: determining a correlation between search content input by a user and one or more groups of attribute information, where the one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content; and determining, based on the correlation, a target text for displaying, where the target text is a language description of the first advertisement. The target text based on the advertisement may enable the user to quickly know that a pushed advertisement is correlated to the search content input by the user, so that the user feels that the pushed advertisement may be helpful to the user, and the pushed advertisement can better attract the user. This helps to improve a click-through rate of the pushed advertisement.

## Description

This application claims priority to Chinese Patent Application No. 202311137437.5, filed with the China National Intellectual Property Administration on September 4, 2023 and entitled "METHOD FOR DISPLAYING SEARCH ENGINE ADVERTISING AND RELATED APPARATUS", which is incorporated herein by reference in its entirety.

### TECHNICAL FIELD

This application relates to the field of terminal technologies, and in particular, to a method for displaying search engine advertising and a related apparatus.

### BACKGROUND

Search engine advertising (search engine advertising, SEA) is a trigger advertisement. After a user inputs search content, a server pushes an advertisement correlated to the search content.

According to a currently known method for displaying search engine advertising, the user may input the search content in a user interface (user interface, UI), and a device (including but not limited to a terminal device or the server) may parse the search content input by the user to obtain a feature of the search content. Then, the device may determine, based on the feature of the search content, one or more advertisements to be pushed to the user. In a push interface of search engine advertising, each advertisement carries a general description text.

However, a click-through rate of the advertisement is not high by using the foregoing method for displaying search engine advertising.

### SUMMARY

This application provides a method for displaying search engine advertising and a related apparatus, to improve a click-through rate of a pushed advertisement.

According to a first aspect, a method for displaying search engine advertising is provided, where the method may be performed by a terminal device or a server, or the method may be performed by a component (like a chip or a chip system) configured in the terminal device or the server; or may be implemented by a logical module or software that can implement all or some functions of a terminal device or a server. This is not limited in this application.

For example, the method includes: determining a correlation between search content input by a user and one or more groups of attribute information, where the one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content; and determining, based on the correlation, a target text for displaying, where the target text is a language description of the first advertisement.

Based on the foregoing solution, the server or the terminal device may determine, based on the correlation between the search content input by the user and the attribute information corresponding to the advertisement, the target text used to describe the advertisement to be displayed to the user. Because the target text used to describe the advertisement is correlated to the search content input by the user, the user may feel that the pushed advertisement may be helpful to the user and the pushed advertisement can better attract the user, and the pushed advertisement can obtain higher attention. In this way, a click-through rate of the pushed advertisement may be improved.

With reference to the first aspect, in some possible implementations, determining the correlation between the search content input by the user and the one or more groups of attribute information includes: parsing the search content to obtain a feature of the search content, where the feature includes at least one of the following: a keyword of the search content, a named entity related to the search content, or an intention of the search content; and determining a correlation between the feature and each of the one or more groups of attribute information.

With reference to the first aspect, in some possible implementations, determining, based on the correlation, the target text for displaying includes: when a correlation between the search content and at least one of the one or more groups of attribute information is greater than or equal to a preset threshold, determining, as target attribute information, a group of attribute information that has a strongest correlation to the search content and that is in the one or more groups of attribute information; and determining the target text based on the target attribute information; or when the correlation between the search content and each group of attribute information is less than the preset threshold, determining, as the target text, a default text corresponding to the first advertisement, where the default text corresponding to the first advertisement is predefined.

With reference to the first aspect, in some possible implementations, determining the target text based on the target attribute information includes: determining, as the target text based on a correspondence between the one or more groups of attribute information and the first advertisement and a correspondence between the one or more groups of attribute information and a plurality of texts, a text that corresponds to the target attribute information and that is in the plurality of texts.

With reference to the first aspect, in some possible implementations, determining the target text based on the target attribute information includes: determining, as a target advertisement text template based on a correspondence between the one or more groups of attribute information and the first advertisement and a correspondence between the one or more groups of attribute information and a plurality of advertisement text templates, an advertisement text template that corresponds to the target attribute information and that is in the plurality of advertisement text templates; and generating the target text based on the target attribute information, the feature of the search content, and the target advertisement text template, where the target text includes at least one word in the target attribute information and/or at least one word in the feature of the search content.

With reference to the first aspect, in some possible implementations, determining the target text based on the target attribute information includes: inputting the target attribute information and the feature of the search content into a text generation model obtained through pre-training, to generate the target text by using the text generation model.

With reference to the first aspect, in some possible implementations, the method is applied to a server, and after determining, based on the correlation, the target text for displaying, the method further includes: sending the target text to a terminal device, where the terminal device is configured to display the target text.

With reference to the first aspect, in some possible implementations, the method is applied to a terminal device, and after determining, based on the correlation, the target text for displaying, the method further includes: displaying the target text.

According to a second aspect, a method for displaying search engine advertising is provided, where the method is applied to a system for displaying search engine advertising, the system for displaying search engine advertising includes a terminal device and a server, and the method includes: The server determines a correlation between search content input by a user and one or more groups of attribute information, where the one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content; the server determines, based on the correlation, a target text for displaying, where the target text is a language description of the first advertisement; the server sends the target text to a terminal device; and the terminal device displays the target text.

Based on the foregoing solution, the server may determine, based on the correlation between the search content input by the user and the attribute information corresponding to the advertisement, the target text used to describe the advertisement to be displayed to the user by the terminal device. Because the target text used to describe the advertisement is correlated to the search content input by the user, the user feels that the pushed advertisement may be helpful to the user and the pushed advertisement can better attract the user, and the pushed advertisement can obtain higher attention. In this way, a click-through rate of the pushed advertisement may be improved.

According to a third aspect, a system for displaying search engine advertising is provided, where the system for displaying search engine advertising includes a server and a terminal device. The server may be configured to: determine a correlation between search content input by a user and one or more groups of attribute information, where the one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content; determine, based on the correlation, a target text for displaying, where the target text is a language description of the first advertisement; and send the target text to a terminal device. The terminal device may be configured to display the target text.

According to a fourth aspect, a server is provided. The server may be configured to implement steps of the server according to any one of the first aspect and the possible implementations of the first aspect, or may be configured to implement steps of the server according to any one of the second aspect and the possible implementations of the second aspect. The server includes a corresponding module configured to perform the foregoing method. The modules included in the server may be implemented by using software and/or hardware.

According to a fifth aspect, this application provides a server, where the server includes at least one processor and at least one communication interface. The processor is coupled to the communication interface, and may be configured to execute a program, to implement the steps of the server according to any one of the first aspect and the possible implementations of the first aspect, or to implement the steps of the server according to any one of the second aspect and the possible implementations of the second aspect.

Optionally, the server further includes a memory, and the processor is coupled to the memory.

According to a sixth aspect, a terminal device is provided. The terminal device may be configured to implement steps of the terminal device according to any one of the first aspect and the possible implementations of the first aspect, or may be configured to implement steps of the terminal device according to any one of the second aspect and the possible implementations of the second aspect. The terminal device includes corresponding modules configured to perform the foregoing method. The modules included in the terminal device may be implemented by using software and/or hardware.

According to a seventh aspect, this application provides a terminal device, where the terminal device includes at least one processor and at least one communication interface. The processor is coupled to the communication interface, and may be configured to execute a program, to implement the steps of the terminal device according to any one of the first aspect and the possible implementations of the first aspect, or to implement the steps of the terminal device according to any one of the second aspect and the possible implementations of the second aspect.

Optionally, the terminal device further includes a memory, and the processor is coupled to the memory.

According to an eighth aspect, this application provides a chip system. The chip system includes at least one processor, configured to support implementation of the function according to any one of the first aspect and the possible implementations of the first aspect; or configured to support implementation of the function according to any one of the second aspect and the possible implementations of the second aspect, for example, processing data in the foregoing method.

In a possible design, the chip system further includes a memory, the memory is configured to store program instructions and data, and the memory is located inside or outside the processor.

The chip system may include a chip, or may include a chip and another discrete component.

According to a ninth aspect, a readable storage medium is provided, where the storage medium stores a program (which may also be referred to as code or instructions), and when the program is run by a device, the method according to any one of the first aspect and the possible implementations of the first aspect is performed, or the method according to any one of the second aspect and the possible implementations of the second aspect is performed.

According to a tenth aspect, a program product is provided, where the program product includes a program (which may also be referred to as code or instructions), and when the program is run, the method according to any one of the first aspect and the possible implementations of the first aspect is performed, or the method according to any one of the second aspect and the possible implementations of the second aspect is performed.

It should be understood that the technical solutions of the third aspect to the tenth aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of a structure of a terminal device applicable to a method for displaying search engine advertising according to an embodiment of this application;
FIG. 2 is a schematic flowchart of a method for displaying search engine advertising according to an embodiment of this application;
FIG. 3 is a diagram of determining an advertisement to be pushed to a user based on a feature of search content according to this application;
FIG. 4 is a diagram of determining a target text from a plurality of texts corresponding to a first advertisement according to an embodiment of this application;
FIG. 5 is a diagram of comparison between different target texts corresponding to different search content according to this application;
FIG. 6 is a diagram of generating a target text based on a target advertisement text template according to an embodiment of this application;
FIG. 7 is a diagram of generating a target text by using a text generation model according to an embodiment of this application;
FIG. 8 is another diagram of comparison between different target texts corresponding to different search content according to this application;
FIG. 9 is a diagram in which a server sends a target text to a terminal device according to an embodiment of this application;
FIG. 10 is a diagram in which a terminal device displays a target text according to an embodiment of this application;
FIG. 11 is another schematic flowchart of a method for displaying search engine advertising according to an embodiment of this application;
FIG. 12 is a diagram of comparison between a currently known method for displaying search engine advertising and a method for displaying search engine advertising according to an embodiment of this application; and
FIG. 13 is a diagram of a system for displaying search engine advertising according to an embodiment of this application.

### DESCRIPTION OF EMBODIMENTS

The following describes technical solutions of this application with reference to accompanying drawings.

First, in embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context.

Second, in this application, the descriptions "when...", "in a case that...", "if", and the like all mean that an apparatus performs corresponding processing in an objective case, but are not intended to limit time. The descriptions do not necessarily mean that the apparatus performs a determining action during implementation, and do not mean any other limitation.

Third, in embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

SEA is a trigger advertisement. After a user inputs search content, a server pushes an advertisement correlated to the search content. Types of the SEA involved in this application include but are not limited to an application (application, App) advertisement, a commodity advertisement, and an information collection and clue advertisement.

According to a currently known method for displaying search engine advertising, the user may input the search content in a UI, and a device (including but not limited to a terminal device or the server) may parse the search content input by the user to obtain a feature of the search content. Then, the device may determine, based on the feature of the search content, one or more advertisements to be pushed to the user. In a push interface of search engine advertising, each advertisement carries a general description text. However, by using the foregoing method for displaying search engine advertising, the general description text of the advertisement displayed to the user is uncorrelated to the search content input by the user. This is one of reasons why the click-through rate of the advertisement is low.

To resolve the foregoing problem, this application provides a method for displaying search engine advertising and a related apparatus. A target text used to describe an advertisement to be displayed to a user may be determined based on a correlation between search content input by the user and attribute information corresponding to the advertisement. Because the target text used to describe the advertisement is correlated to the search content input by the user, the user may feel that the pushed advertisement may be helpful to the user and the pushed advertisement can better attract the user, and the pushed advertisement can obtain higher attention. In this way, a click-through rate of the pushed advertisement may be improved.

The method for displaying search engine advertising provided in this application may be applied to a device like a terminal device or a server. The terminal device may include, for example, but is not limited to, a device having a display (or a display), like a smartphone, a tablet computer, a smart screen, a smart television, a smart watch, a wearable device, a vehicle-mounted device, a notebook computer, a personal computer (personal computer, PC), an ultra-mobile personal computer (ultra-mobile personal computer, UMPC), a netbook, a personal digital assistant (personal digital assistant, PDA), or a distributed device. A specific type of the terminal device is not limited in embodiments of this application. The server may include but is not limited to a cloud service, an entity server, a server cluster, or the like. A specific type of the server is not limited in embodiments of this application.

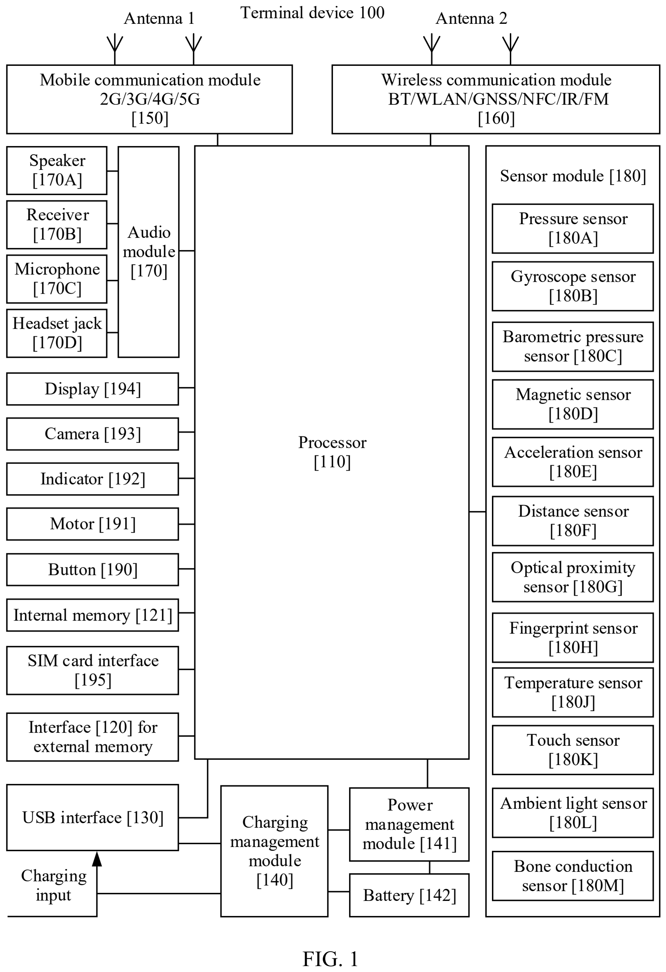

Before the method for displaying search engine advertising provided in embodiments of this application is described in detail below, a terminal device applicable to embodiments of this application is first described as an example with reference to FIG. 1.

FIG. 1 is a diagram of a structure of a terminal device applicable to a method for displaying search engine advertising according to an embodiment of this application.

For example, FIG. 1 is a diagram of a structure of a terminal device 100. As shown in FIG. 1, the terminal device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent components, or may be integrated into one or more processors.

The application processor outputs a sound signal through the audio module 170 (for example, the speaker 170A), or displays an image or a video on the display 194.

The controller may be a nerve center and a command center of the terminal device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may perform different operations by executing the instructions, to implement different functions. For example, the instructions may be instructions pre-stored in the memory before the device is delivered from a factory, or may be instructions read from a new APP after a user installs the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be used to transmit data between the terminal device 100 and a peripheral device, or may be configured to connect to a headset for playing audio through the headset. This interface may further be configured to connect to another device, for example, an augmented reality (augmented reality, AR) device. It may be understood that an interface connection relationship between the modules illustrated in this application is merely an example for description, and does not constitute a limitation on the structure of the terminal device 100. In some other embodiments, the terminal device 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the terminal device 100. The charging management module 140 supplies power to the terminal device 100 through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication frequency bands. Different antennas may also be reused to improve antenna utilization.

The mobile communication module 150 may provide a wireless communication solution that includes 2G/3G/4G/5G or the like and that is applied to the terminal device 100.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology.

The terminal device 100 may implement a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, which execute program instructions to generate or change display information.

The display 194, which may also be referred to as a screen, may be configured to display an image, a video, and the like. It should be understood that the display 194 may further include more components, for example, a backlight board or a drive circuit. The backlight board may be configured to provide a light source, and the display panel emits light based on the light source provided by the backlight board. The drive circuit may be configured to control a liquid crystal of the liquid crystal layer to transmit light or not to transmit light.

The terminal device 100 may implement a photographing function by using the ISP, the camera 193, the video codec, the GPU, the display 194, the application processor, and the like.

The interface 120 for external memory may be used to connect to an external memory card, for example, a micro SD card, to extend a storage capability of the terminal device 100. The external memory card communicates with the processor 110 through the interface 120 for external memory, to implement a data storage function. For example, files such as music and videos are stored in the external memory card.

The internal memory 121 may be configured to store device-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a voice playing function or an image playing function), and the like. The data storage area may store data (for example, audio data and an address book) and the like created when the terminal device 100 is used. In addition, the internal memory 121 may include a high-speed random access memory, or may include a non-volatile memory, for example, at least one magnetic disk storage component or a flash memory component.

The terminal device 100 may implement an audio function, for example, music playing or recording through the audio module 170, the speaker 170A, the receiver 170B, the microphone 170C, the headset jack 170D, the application processor, and the like.

It may be understood that the structure shown in this application does not constitute a specific limitation on the terminal device 100. In some other embodiments, the terminal device 100 may include more or fewer components than those shown in the figure, or a combination of some components, or splits from some components, or a different component layout. The components shown in the figure may be implemented by using hardware, software, or a combination of software and hardware.

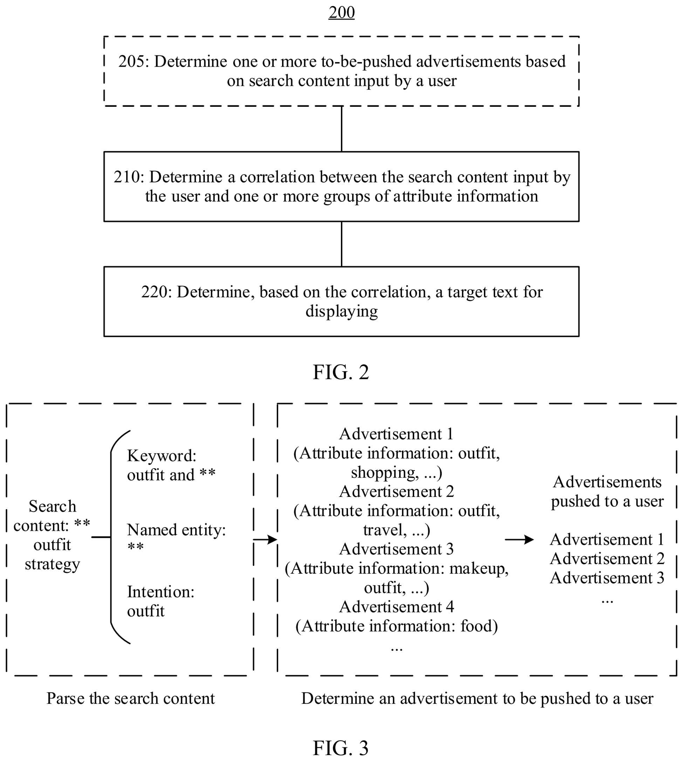

FIG. 2 is a schematic flowchart of a method for displaying search engine advertising according to an embodiment of this application.

As shown in FIG. 2, the method 200 may include step 210 and step 220. The method 200 may be encapsulated as a functional plug-in, and is embedded in some applications having an advertisement push function, for example, a search engine or a browser. An application scenario of the method 200 may include but is not limited to a browser-based search scenario, a search engine-based global search scenario, and another search scenario supported by an advertisement push media. The steps of the method 200 may be performed by a terminal device or a server. For example, the method 200 may be performed by a component (such as a chip or a chip system) configured in the server, or may be implemented by a logical module or software that can implement all or some functions of the server. This is not limited in this embodiment of this application. In this application, the server may be a cloud server, or may be an entity server device. The server device may be one server device, or may be a server cluster including a plurality of server devices. This is not limited in this embodiment of this application. When a computing capability of the terminal device is strong, the method 200 may also be deployed on the terminal device, and the terminal device may have a structure shown in FIG. 1. This is not limited in this embodiment of this application. The following describes in detail the steps in FIG. 2.

Step 210: Determine a correlation between search content input by a user and one or more groups of attribute information.

The one or more groups of attribute information correspond to a first advertisement, each group of attribute information includes at least one of the following: a field related to the first advertisement, a descriptive statement of the first advertisement, or a keyword (or a keyword set) of the first advertisement. The one or more groups of attribute information are prestored. An APP-type advertisement may be used to present APP information, including at least one of an identifier of an APP, a name of the APP, and an introduction to the APP. In some possible embodiments, if the APP information is presented as a search result, it may be considered that the APP information is a presentation form of the APP-type advertisement. In some other possible embodiments, an identifier of an "advertisement" is also presented together with the APP information, to indicate that the APP is promoted. An APP-type advertisement is used as an example of the first advertisement. Each APP may correspond to one or more groups of pre-stored attribute information. Each group of attribute information of each APP includes at least one of the following: a field related to the APP, a descriptive statement of the APP, or a keyword (or a keyword set) of the APP.

The first advertisement is a to-be-displayed advertisement determined by the server or the terminal device based on the search content. In other words, in an actual application scenario, before step 210, the method may further include step 205: determine one or more to-be-pushed advertisements based on the search content input by the user. That one or more to-be-pushed advertisements are determined based on the search content input by the user may also be understood as that the first advertisement is a list of to-be-pushed advertisements that may be determined by the server or the terminal device based on the search content input by the user. As described above, according to a currently known method for displaying search engine advertising, the user may input the search content in a UI, and a device (including but not limited to the terminal device or the server) may parse the search content input by the user to obtain a feature of the search content. Then, the device may determine, based on the feature of the search content, one or more advertisements to be pushed to the user. In this embodiment of this application, one or more advertisements to be pushed to the user may be determined based on a known manner of determining a list of to-be-pushed advertisements. This is not limited in this application. The first advertisement in this application is any one of the one or more to-be-pushed advertisements determined by the server or the terminal device. This is not limited in this application.

In a possible implementation, when the method 200 is applied to the terminal device, the terminal device may obtain, in response to an input operation performed by the user in a UI of a search engine or a browser, the search content input by the user.

In another possible implementation, when the method 200 is applied to the server, the server may obtain, from the terminal device, the search content input by the user.

In this embodiment of this application, the one or more advertisements to be pushed to the user may be determined based on steps in a currently known method for displaying search engine advertising. As an example rather than a limitation, for example, according to a currently known method for displaying search engine advertising, the terminal device or the server may find, based on the feature of the search content input by the user, at least one advertisement correlated to the feature of the search content from the plurality of pre-stored advertisements, and sort the at least one advertisement based on a correlation with the feature of the search content, and finally determine one or more advertisements that have strong correlations to the feature of the search content as the advertisement finally pushed to the user.

For example, the server or the terminal device may parse the search content input by the user, to obtain the feature of the search content. For example, that the server or the terminal device parses the search content input by the user may include but is not limited to: performing keyword extraction on the search content, performing named entity recognition on the search content, or performing intention recognition on the search content. For example, search content is "** outfit strategy". The search content is parsed. A keyword (or a keyword set) of the search content includes "outfit and **", a named entity of the search content includes "**", and a search intention is "outfit". For another example, search content is "What pants does a red coat match?". The search content is parsed. A keyword of the search content includes "coat, pants, match, and red", a named entity of the search content includes "red coat and pants", and a search intention is "outfit". For another example, search content is "** scenic spot tour strategy". The search content is parsed. A keyword of the search content includes "** scenic spot, tour, and strategy", a named entity of the search content includes "** scenic spot and strategy", and a search intention is "travel".

FIG. 3 is a diagram of determining an advertisement to be pushed to a user based on a feature of search content according to this application.

For example, as shown in FIG. 3, for example, search content is "** outfit strategy". A server or a terminal device may first parse the search content to obtain a feature of the search content, that is, parse the search content. A keyword of the search content includes "outfit and **", a named entity of the search content is "**", and a search intention is "outfit". Further, the server or the terminal device may determine, based on the feature of the search content and pre-stored attribute information of a plurality of advertisements, an advertisement to be pushed to the user. For example, as shown in FIG. 3, attribute information of an advertisement 1 includes outfit, shopping, and the like, attribute information of an advertisement 2 includes outfit, travel, and the like, attribute information of an advertisement 3 includes makeup, outfit, and the like, and attribute information of an advertisement 4 includes food. Therefore, the server or the terminal device may determine that the advertisement 1, the advertisement 2, the advertisement 3, and the like are correlated to the search content, and may determine the advertisement 1, the advertisement 2, the advertisement 3, and the like as advertisements to be pushed to the user.

After the terminal device or the server determines, based on the search content input by the user, one or more advertisements to be pushed to the user, the terminal device or the server may further determine a correlation between the search content input by the user and one or more groups of attribute information corresponding to the first advertisement.

In a possible implementation, determining the correlation between the search content input by the user and the one or more groups of attribute information includes: parsing the search content to obtain a feature of the search content, where the feature includes at least one of the following: a keyword of the search content, a named entity related to the search content, or an intention of the search content; and determining a correlation between the feature and each of the one or more groups of attribute information.

As described above, the server or the terminal device may parse the search content input by the user, to obtain the feature of the search content. For detailed descriptions, refer to the foregoing related descriptions. For brevity, details are not described herein again.

After obtaining the feature of the search content, the server or the terminal device may determine the correlation between the feature of the search content and each of the one or more groups of attribute information. In a possible implementation, the feature of the search content and each group of attribute information may be input into a pre-trained correlation model, and the correlation model obtains the correlation between the feature of the search content and each group of attribute information through analysis. The correlation model may be a model obtained through training based on deep learning, machine learning, or the like. This is not limited in this application.

Step 220: Determine, based on the correlation, a target text for displaying.

The target text is a language description of the first advertisement.

After determining the correlation between the feature of the search content and each of the one or more groups of attribute information, the server or the terminal device may determine, based on the correlation, the target text for displaying.

In a possible implementation, determining, based on the correlation, the target text for displaying includes: when a correlation between the search content and at least one of the one or more groups of attribute information is greater than or equal to a preset threshold, determining, as target attribute information, a group of attribute information that has a strongest correlation to the search content and that is in the one or more groups of attribute information; and determining the target text based on the target attribute information; or when the correlation between the search content and each group of attribute information is less than the preset threshold, determining, as the target text, a default text corresponding to the first advertisement, where the default text corresponding to the first advertisement is predefined.

A value of the preset threshold is not limited in this embodiment of this application. A specific value of the preset threshold may be determined based on an actual application situation.

If a correlation between the search content and a group of attribute information is greater than or equal to the preset threshold, it may be considered that the search content is strongly correlated to the group of attribute information; if a correlation between the search content and a group of attribute information is less than the preset threshold, it may be considered that the search content is weakly correlated to the group of attribute information.

When at least one of the one or more groups of attribute information is strongly correlated to the search content, the server or the terminal device may determine, as the target attribute information, a group of attribute information that is in the at least one group of attribute information and that has a strongest correlation to (or is most correlated to) the search content, so that the target text may be further determined based on the target attribute information. When each of the one or more groups of attribute information is weakly correlated to the search content, the server or the terminal device may determine, as the target text, a default text corresponding to the first advertisement.

In a possible implementation, determining the target text based on the target attribute information includes: determining, as the target text based on a correspondence between the one or more groups of attribute information and the first advertisement and a correspondence between the one or more groups of attribute information and a plurality of texts, a text that corresponds to the target attribute information and that is in the plurality of texts.

It should be noted that the correspondence between the one or more groups of attribute information and the first advertisement, and the correspondence between the one or more groups of attribute information and the plurality of texts may be configured or stored in a form of a table, or may be configured or stored in another form, for example, an ordered array or a queue. This is not limited in this application.

In this embodiment of this application, the correspondence between the one or more groups of attribute information and the first advertisement, and the correspondence between the one or more groups of attribute information and the plurality of texts are shown in a form of a table. However, this application should not be limited thereto.

Table 1 is an example of the correspondence between the first advertisement and the one or more groups of attribute information, and the correspondence between the one or more groups of attribute information and the plurality of texts.

**Table 1**

| | | | | |
|---|---|---|---|---|
| Advertisement 1 | Attribute information 1 | Text 111 | - | - |
| | Attribute information 2 | Text 121 | Text 122 | ... |
| | ... | ... | ... | ... |
| Advertisement 2 | Attribute information 1 | Text 211 | Text 212 | ... |
| | Attribute information 2 | Text 221 | Text 222 | ... |
| | ... | ... | ... | ... |
| ... | ... | ... | ... | ... |
| Advertisement n | Attribute information 1 | Text n11 | Text n12 | ... |
| | Attribute information 2 | Text n21 | Text n22 | ... |
| | ... | ... | ... | ... |

As shown in Table 1, the server or the terminal device may prestore N advertisements (n=N≥1, and N and n are integers) from the advertisement 1 to the advertisement n, and the first advertisement is any one of the one or more to-be-pushed advertisements that are determined by the server or the terminal device from the N advertisements.

As shown in Table 1, one advertisement may correspond to one or more groups of attribute information, and each group of attribute information may correspond to one or more texts. For example, the advertisement 1 may correspond to a plurality of groups of attribute information including the attribute information 1 and the attribute information 2, and the attribute information 1 corresponding to the advertisement 1 may correspond to one text, namely, the text 111. For another example, the advertisement n may correspond to a plurality of groups of attribute information including the attribute information 1 and the attribute information 2. The attribute information 1 corresponding to the advertisement n may correspond to a plurality of texts including the text n11 and the text n12.

As an example rather than a limitation, for example, the attribute information 1 corresponding to the advertisement 1 includes: a field "fashion outfit" related to the advertisement 1, and a keyword "outfit, match, ..." of the advertisement 1, and the text 111 corresponding to the attribute information 1 corresponding to the advertisement 1 is "exquisite outfit skill and making 'good-looking' become daily". For another example, the attribute information 2 corresponding to the advertisement 1 includes: a field "travel" related to the advertisement 1, and a keyword "travel, tour, journey, ..." of the advertisement 1, and the text 121 corresponding to the attribute information 2 corresponding to the advertisement 1 is "comprehensive scenic spot strategy and perfect travel journey". For another example, the attribute information 1 corresponding to the advertisement 2 includes: a field "makeup and skin care" related to the advertisement 2, and a keyword "whitening, obscuring, makeup long-lasting, makeup removal, moisturizing and water replenishing, ..." of the advertisement 2, and the text 211 corresponding to the attribute information 1 corresponding to the advertisement 2 is "fashion all-round skin care and zero-distance natural beauty". For another example, the attribute information 1 corresponding to the advertisement n includes: a field "food" related to the advertisement n, and a keyword "food, delicious, shopping and eating, snack, color, aroma, and taste, good-tasting, breakfast, lunch, dinner, night snack, late-night snack, fast food, local food, special food, ..." of the advertisement n, and the text n11 corresponding to the attribute information 1 corresponding to the advertisement n is "tasting authentic flavor and visiting food destinations".

When the target attribute information corresponds to only one text, the text is the target text. When the target attribute information corresponds to a plurality of texts, the target text is any one of the plurality of texts.

In an example, the advertisement 1 is the first advertisement. When the attribute information 1 corresponding to the advertisement 1 is the target attribute information, the server or the terminal device may determine, as the target text, the text 111 corresponding to the attribute information 1 corresponding to the advertisement 1.

In another example, the advertisement n is the first advertisement. When the attribute information 1 corresponding to the advertisement n is the target attribute information, the server or the terminal device may randomly determine, as the target text, any one of a plurality of texts including the text n11 and the text n12 corresponding to the attribute information 1 corresponding to the advertisement n.

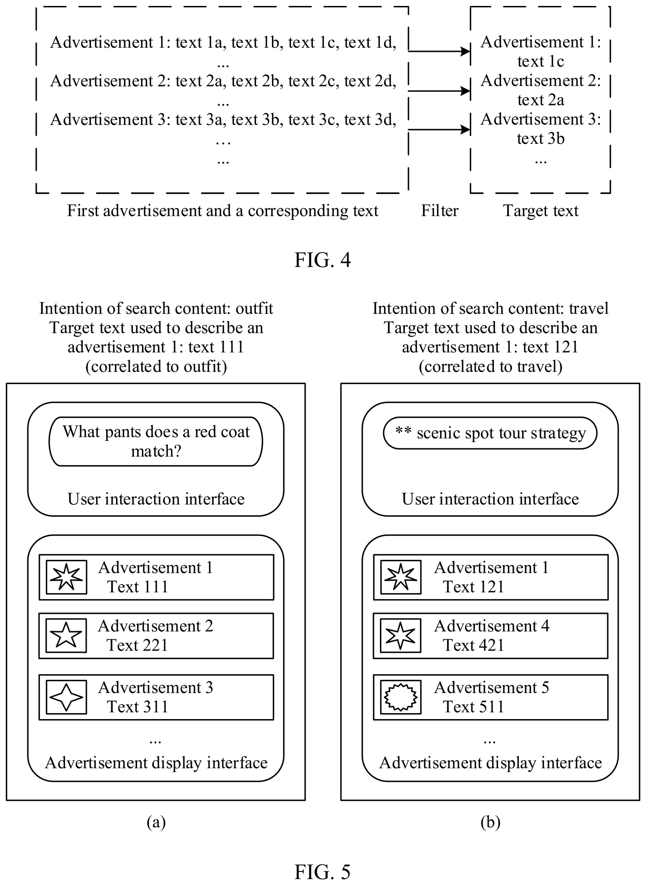

FIG. 4 is a diagram of determining a target text from a plurality of texts corresponding to a first advertisement according to an embodiment of this application.

For example, as shown in FIG. 4, an advertisement 1, an advertisement 2, an advertisement 3, and the like are advertisements that are to be pushed to a user and that are determined by a server or a terminal device, and a first advertisement is any one of the advertisement 1, the advertisement 2, the advertisement 3, and the like. Texts corresponding to the advertisement 1 include a text 1a, a text 1b, a text 1c, a text 1d, and the like. Texts corresponding to the advertisement 2 include a text 2a, a text 2b, a text 2c, a text 2d, and the like. Texts corresponding to the advertisement 3 include a text 3a, a text 3b, a text 3c, a text 3d, and the like. The server or the terminal device may separately determine, based on target attribute information of the advertisement 1, the advertisement 2, the advertisement 3, and the like, a target text from the texts corresponding to the advertisements. For example, after filtering, a target text of the advertisement 1 is the text 1c, a target text of the advertisement 2 is the text 2a, and a target text of the advertisement 3 is the text 3b.

FIG. 5 is a diagram of comparison between different target texts corresponding to different search content according to this application.

For example, in (a) in FIG. 5, search content is "What pants does a red coat match?", and in (b) of FIG. 5, search content is "** scenic spot tour strategy". As described above, for the search content "What pants does a red coat match?", the intention is "outfit". For the search content "** scenic spot tour strategy", the intention is "travel". In (a) in FIG. 5, based on the search content "What pants does a red coat match?", it is determined that advertisements to be pushed to a user include an advertisement 1, an advertisement 2, and an advertisement 3. A target text used to describe the advertisement 1 is a text 111, a target text used to describe the advertisement 2 is a text 221, and a target text used to describe the advertisement 3 is a text 311. In (b) in FIG. 5, based on the search content "** scenic spot tour strategy", it is determined that advertisements to be pushed to a user include an advertisement 1, an advertisement 4, and an advertisement 5. A target text used to describe the advertisement 1 is a text 121, a target text used to describe the advertisement 4 is a text 421, and a target text used to describe the advertisement 5 is a text 511. In both (a) in FIG. 5 and (b) in FIG. 5, the advertisement 1 is displayed to the user. However, a difference lies in that in (a) in FIG. 5, the target text used to describe the advertisement 1 is the text 111, and the text 111 is a text correlated to "outfit", and in (b) in FIG. 5, the target text used to describe the advertisement 1 is the text 121, and the text 121 is a text correlated to "travel".

In a possible implementation, determining the target text based on the target attribute information includes: determining, as a target advertisement text template based on a correspondence between the one or more groups of attribute information and the first advertisement and a correspondence between the one or more groups of attribute information and a plurality of advertisement text templates, an advertisement text template that corresponds to the target attribute information and that is in the plurality of advertisement text templates; and generating the target text based on the target attribute information, the feature of the search content, and the target advertisement text template, where the target text includes at least one word in the target attribute information and/or at least one word in the feature of the search content.

It should be noted that the correspondence between the one or more groups of attribute information and the first advertisement, and the correspondence between the one or more groups of attribute information and the plurality of advertisement text templates may be configured or stored in a form of a table, or may be configured or stored in another form, for example, an ordered array or a queue. This is not limited in this application.

In this embodiment of this application, the correspondence between the one or more groups of attribute information and the first advertisement, and the correspondence between the one or more groups of attribute information and the plurality of advertisement text templates are shown in a form of a table. However, this application should not be limited thereto.

Table 2 is an example of the correspondence between the first advertisement and the one or more groups of attribute information, and the correspondence between the one or more groups of attribute information and the plurality of advertisement text templates.

**Table 2**

| | | | | |
|---|---|---|---|---|
| Advertisement 1 | Attribute information 1 | Advertisement text templates 111 | | |
| | Attribute information 2 | Advertisement text templates 121 | Advertisement text templates 122 | ... |
| | ... | ... | ... | ... |
| Advertisement 2 | Attribute information 1 | Advertisement text templates 211 | Advertisement text templates 212 | ... |
| | Attribute information 2 | Advertisement text templates 221 | Advertisement text templates 222 | ... |
| | ... | ... | ... | ... |
| ... | ... | ... | ... | ... |
| Advertisement n | Attribute information 1 | Advertisement text templates n11 | Advertisement text templates n12 | ... |
| | Attribute information 2 | Advertisement text templates n21 | Advertisement text templates n22 | ... |
| | ... | ... | ... | ... |

As shown in Table 2, the server or the terminal device may prestore N advertisements (n=N≥1, and N and n are integers) from the advertisement 1 to the advertisement n, and the first advertisement is any one of the one or more to-be-pushed advertisements that are determined by the server or the terminal device from the N advertisements.

As shown in Table 2, one advertisement may correspond to one or more groups of attribute information, and each group of attribute information may correspond to one or more advertisement text templates. For example, the advertisement 1 may correspond to a plurality of groups of attribute information including the attribute information 1 and the attribute information 2, and the attribute information 1 corresponding to the advertisement 1 may correspond to one text, namely, the advertisement text template 111. For another example, the advertisement n may correspond to a plurality of groups of attribute information including the attribute information 1 and the attribute information 2. The attribute information 1 corresponding to the advertisement n may correspond to a plurality of texts including the advertisement text template n11 and the advertisement text template n12.

When the target attribute information corresponds to only one advertisement text template, the advertisement text template is the target advertisement text template. When the target attribute information corresponds to a plurality of advertisement text templates, the target advertisement text template is any one of the plurality of advertisement text templates.

In an example, the advertisement 1 is the first advertisement. When the attribute information 1 corresponding to the advertisement 1 is the target attribute information, the server or the terminal device may determine, as the target advertisement text template, the advertisement text template 111 corresponding to the attribute information 1 corresponding to the advertisement 1. Further, the server or the terminal device may embed at least one word in the target attribute information and/or at least one word in the feature of the search content into the target advertisement text template, to generate a target text with a smooth statement.

In another example, the advertisement n is the first advertisement. When the attribute information 1 corresponding to the advertisement n is the target attribute information, the server or the terminal device may randomly determine, as the target text, any one of a plurality of texts including the text n11 and the text n12 corresponding to the attribute information 1 corresponding to the advertisement n. Further, the server or the terminal device may embed at least one word in the target attribute information and/or at least one word in the feature of the search content into the target advertisement text template, to generate a target text with a smooth statement.

In another possible implementation, when the target attribute information corresponds to a plurality of advertisement text templates, the server or the terminal device may separately embed at least one word in the target attribute information and/or at least one word in the feature of the search content into the plurality of advertisement text templates, to generate a plurality of texts with smooth statements. Further, the server or the terminal device may randomly determine any one of the plurality of generated texts as the target text, or the server or the terminal device may determine a text whose statement is smoother in the plurality of texts as the target text. This is not limited in embodiments of this application.

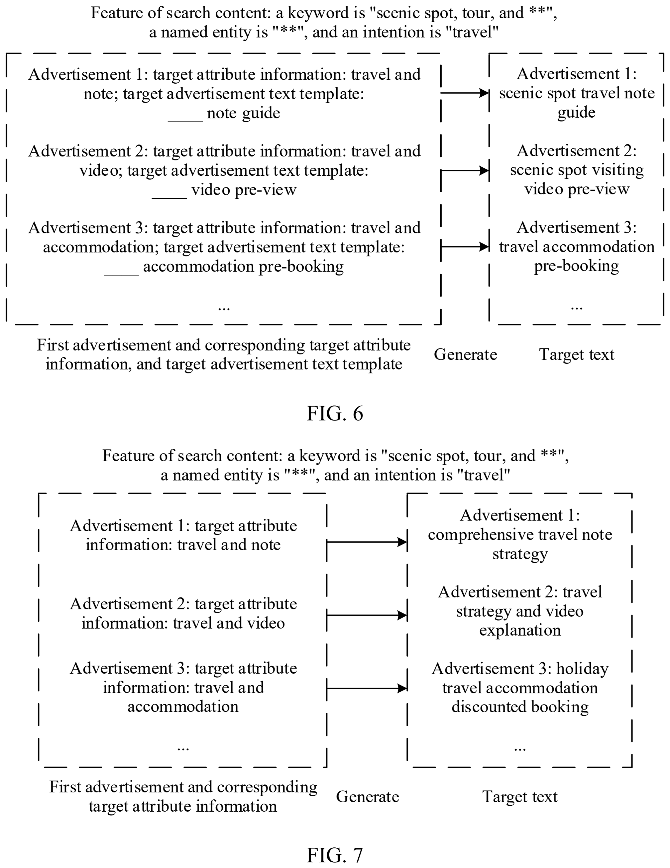

FIG. 6 is a diagram of generating a target text based on a target advertisement text template according to an embodiment of this application.

For example, as shown in FIG. 6, search content is "** tour and which scenic spot is worth recommending?". The search content is parsed to obtain a feature of the search content, where a keyword of the search content is "scenic spot, tour, and **", a named entity of the search content is "**", and an intention of the search is "travel". "**" may be a city name. This is not limited in this embodiment of this application. Target attribute information of an advertisement 1 includes "travel and note", and a target advertisement text template is "_ note guide". Target attribute information of an advertisement 2 includes "travel and video", and a target advertisement text template is "_ video pre-view". Target attribute information of an advertisement 3 includes "travel and accommodation", and a target advertisement text template is "_ accommodation pre-booking". A server and a terminal device may embed at least one word in target attribute information of a first advertisement and/or at least one word in the feature of the search content into a target advertisement text template, to generate a target text with a smooth statement. For example, a generated target text of the advertisement 1 is "scenic spot travel note guide", a generated target text of the advertisement 2 is "scenic spot visiting video pre-view", and a generated target text of the advertisement 3 is "travel accommodation pre-booking".

In a possible implementation, determining the target text based on the target attribute information includes: inputting the target attribute information and the feature of the search content into a text generation model obtained through pre-training, to generate the target text by using the text generation model.

After determining the target attribute information and the feature of the search content, the server or the terminal device may input the target attribute information and the feature of the search content into the text generation model obtained through pre-training, and analyze and process the target attribute information and the feature of the search content by using the text generating model, to generate the target text. The text generation model may be a model obtained through training based on deep learning, machine learning, or the like. This is not limited in this application.

FIG. 7 is a diagram of generating a target text by using a text generation model according to an embodiment of this application.

For example, as shown in FIG. 7, search content is "** tour and which scenic spot is worth recommending?". The search content is parsed to obtain a feature of the search content, where a keyword of the search content is "scenic spot, tour, and **", a named entity of the search content is "**", and an intention of the search is "travel". "**" may be a city name. This is not limited in this embodiment of this application. Target attribute information of an advertisement 1 includes "travel and note", target attribute information of an advertisement 2 includes "travel and video", and target attribute information of an advertisement 3 includes "travel and accommodation". The server and the terminal device may input the target attribute information of the first advertisement and/or the feature of the search content into the text generation model, and the text generation model generates a target text with a smooth statement. For example, a generated target text of the advertisement 1 is "comprehensive travel note strategy", a generated target text of the advertisement 2 is "travel strategy and video explanation", and a generated target text of the advertisement 3 is "holiday travel accommodation discounted booking".

In a possible implementation, the method 200 is applied to a server, and after determining, based on the correlation, the target text for displaying, the method 200 further includes: sending the target text to a terminal device, where the terminal device is configured to display the target text.

In other words, after determining the target text, the server may send the target text to the terminal device. Correspondingly, the terminal device may receive the target text from the server, so that the terminal device may display the target text, and the user may see the target text that has a correlation to the search content.

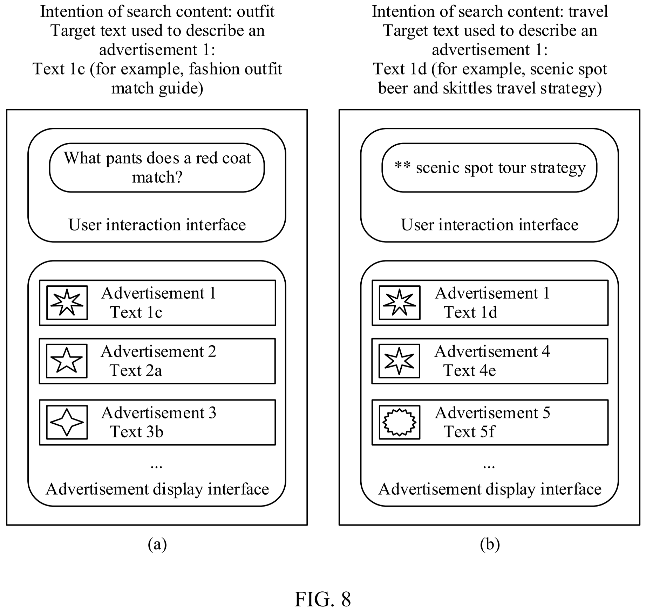

FIG. 8 is another diagram of comparison between different target texts corresponding to different search content according to this application.

For example, in (a) in FIG. 8, search content is "What pants does a red coat match?", and in (b) of FIG. 8, search content is "** scenic spot tour strategy". As described above, for the search content "What pants does a red coat match?", the intention is "outfit". For the search content "** scenic spot tour strategy", the intention is "travel". In (a) in FIG. 8, based on the search content "What pants does a red coat match?", it is determined that advertisements to be pushed to a user include an advertisement 1, an advertisement 2, and an advertisement 3. A target text used to describe the advertisement 1 is a text 1c, a target text used to describe the advertisement 2 is a text 2a, and a target text used to describe the advertisement 3 is a text 3b. In (b) in FIG. 8, based on the search content "** scenic spot tour strategy", it is determined that advertisements to be pushed to a user include an advertisement 1, an advertisement 4, and an advertisement 5. A target text used to describe the advertisement 1 is a text 1d, a target text used to describe the advertisement 4 is a text 4e, and a target text used to describe the advertisement 5 is a text 5f. In both (a) in FIG. 8 and (b) in FIG. 8, the advertisement 1 is displayed to the user. However, a difference lies in that in (a) in FIG. 8, a target text used to describe the advertisement 1 is the text 1c. As an example rather than a limitation, the text 1c may be a "fashion outfit match guide". Apparently, the text 1c is a text correlated to "outfit". However, in (b) in FIG. 8, the target text used to describe the advertisement 1 is the text 1d. As an example rather than a limitation, the text 1d may be "scenic spot beer and skittles travel strategy". Apparently, the text 1d is a text correlated to "travel".

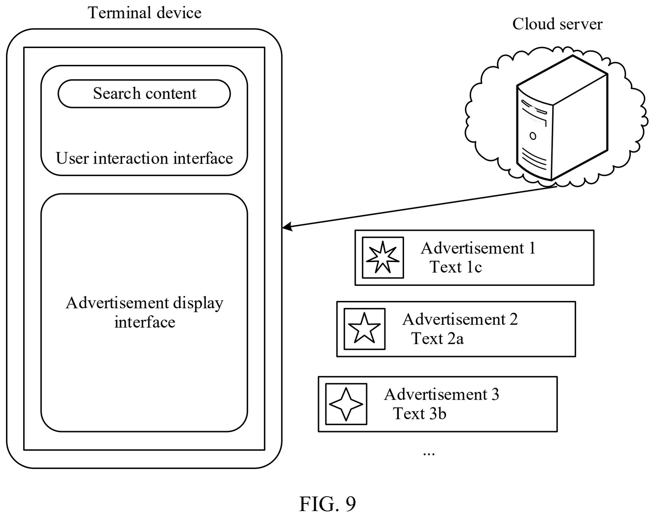

FIG. 9 is a diagram in which a server sends a target text to a terminal device according to an embodiment of this application.

As shown in FIG. 9, an example in which a server is a cloud server is used. After determining the target text, the server may send the target text to the terminal device. For example, the server determines that a target text of an advertisement 1 is a text 1c, determines that a target text of an advertisement 2 is a text 2a, and determines that a target text of an advertisement 3 is a text 3b. The server may send the target texts of the advertisements to the terminal device, so that the terminal device may display the advertisements and the corresponding target texts in an advertisement display interface.

In a possible implementation, the method 200 is applied to a terminal device. After determining, based on the correlation, the target text for displaying, the method 200 further includes: displaying the target text.

When a computing capability of the terminal device can perform the steps in the method 200, the method 200 may be deployed on the terminal device. After determining the target text, the terminal device may display the target text, so that the user can see the target text that has a correlation to the search content.

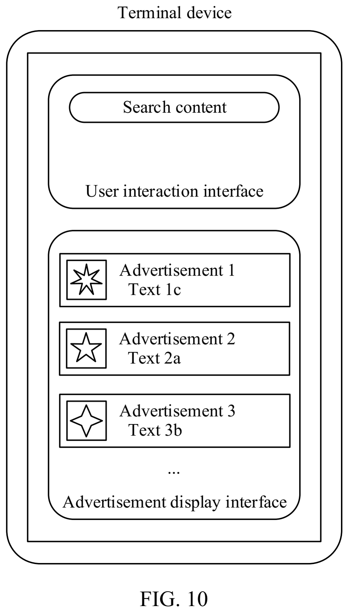

FIG. 10 is a diagram in which a terminal device displays a target text according to an embodiment of this application.

As shown in FIG. 10, it is determined that a target text of an advertisement 1 is a text 1c, a target text of an advertisement 2 is a text 2a, and a target text of an advertisement 3 is a text 3b. The terminal device may display these advertisements and corresponding target texts in an advertisement display interface of the terminal device, and all the displayed target texts of these advertisements are correlated to search content input by a user.

Based on the foregoing solution, the server or the terminal device may determine, based on the correlation between the search content input by the user and the attribute information corresponding to the advertisement, the target text used to describe the advertisement to be displayed to the user. Because the target text used to describe the advertisement is correlated to the search content input by the user, the user feels that the pushed advertisement may be helpful to the user and the pushed advertisement can better attract the user, and the pushed advertisement can obtain higher attention. In this way, a click-through rate of the pushed advertisement may be improved.

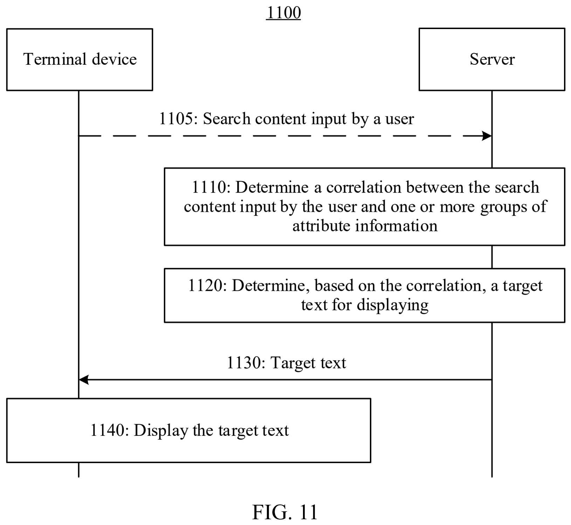

FIG. 11 is another schematic flowchart of a method for displaying search engine advertising according to an embodiment of this application.

As shown in FIG. 11, a method 1100 may include step 1110 to step 1140. The method 1100 may be applied to a system for displaying search engine advertising. The system for displaying search engine advertising includes a terminal device and a server, where the server may perform step 1110 to step 1130, and the terminal device may perform step 1140. For detailed descriptions of the terminal device and the server, refer to the foregoing related descriptions. For brevity, details are not described herein again. The following describes the steps in FIG. 11 in detail.

Step 1110: The server determines a correlation between search content input by a user and one or more groups of attribute information.

The one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content.

The first advertisement is any one of the one or more to-be-pushed advertisements determined by the server or the terminal device. In other words, the first advertisement is any advertisement in a list of to-be-pushed advertisements determined by the server or the terminal device. An APP-type advertisement is used as an example of the first advertisement. Each APP may correspond to one or more groups of pre-stored attribute information. Each group of attribute information of each APP includes at least one of the following: a field related to the APP, a descriptive statement of the APP, or a keyword (or a keyword set) of the APP.

The server can parse the search content input by the user to further determine the correlation between the search content and the one or more groups of attribute information. For detailed descriptions, refer to related content of step 210 in the foregoing method 200. For brevity, details are not described herein again.

Before step 1110, the method 1100 may further include step 1105.

Step 1105: The terminal device sends, to the server, the search content input by the user. Correspondingly, the server may receive the search content input by the user and sent by the terminal device.

The terminal device may obtain, in response to an input operation performed by the user in a UI of a search engine or a browser, the search content input by the user. Further, the terminal device may send the search content to the server, so that the server performs subsequent analysis and processing.

Step 1120: The server determines, based on the correlation, a target text for displaying.

The target text is a language description of the first advertisement.

For detailed descriptions, refer to related content of step 220 in the foregoing method 200. For brevity, details are not described herein again.

Step 1130: The server sends the target text to the terminal device. Correspondingly, the terminal device receives the target text from the server.

For detailed descriptions, refer to the related descriptions in FIG. 9. For brevity, details are not described herein again.

Step 1140: The terminal device displays the target text.

For detailed descriptions, refer to the related descriptions in FIG. 10. For brevity, details are not described herein again.

Based on the foregoing solution, the server may determine, based on the correlation between the search content input by the user and the attribute information corresponding to the advertisement, the target text used to describe the advertisement to be displayed to the user by the terminal device. Because the target text used to describe the advertisement is correlated to the search content input by the user, the user feels that the pushed advertisement may be helpful to the user and the pushed advertisement can better attract the user, and the pushed advertisement can obtain higher attention. In this way, a click-through rate of the pushed advertisement may be improved.

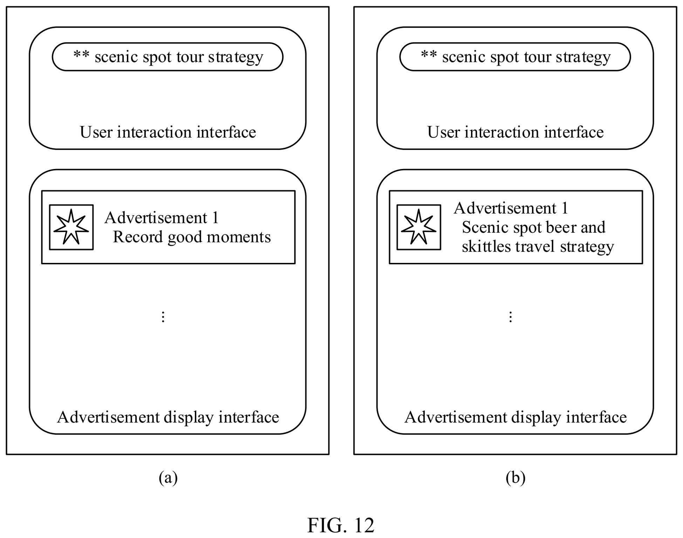

To better understand an effect of the method for displaying search engine advertising provided in this embodiment of this application, the following briefly describes the method with reference to FIG. 12.

FIG. 12 is a diagram of comparison between a currently known method for displaying search engine advertising and a method for displaying search engine advertising according to an embodiment of this application.

As shown in FIG. 12, when search content input by a user is "** scenic spot tour strategy", an advertisement display interface displayed in the currently known method for displaying search engine advertising is shown in (a) in FIG. 12, and an advertisement display interface displayed in the method for displaying search engine advertising provided in this embodiment of this application is shown in (b) in FIG. 12. A general description text of an advertisement 1 displayed in (a) in FIG. 12 is "record good moments", the general description text is fixed, and it cannot be obviously seen that the text is correlated to the search content "** scenic spot tour strategy" input by the user. A general description text of an advertisement 1 displayed in (b) in FIG. 12 is "scenic spot beer and skittles travel strategy", and it can be clearly seen from the general description text that the text is correlated to the search content "** scenic spot tour strategy" input by the user. Therefore, by using the method for displaying search engine advertising provided in this embodiment of this application, the user may feel that a pushed advertisement is helpful to the user, and the pushed advertisement can better attract the user, so that the pushed advertisement can obtain higher attention. This helps improve a click-through rate of the pushed advertisement.

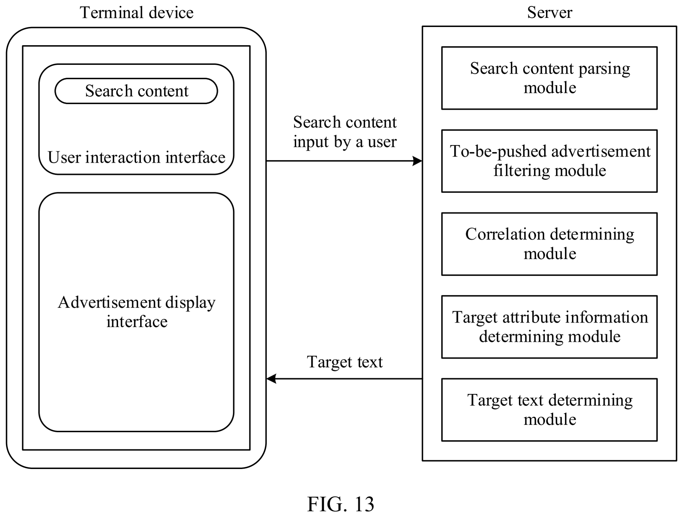

FIG. 13 is a diagram of a system for displaying search engine advertising according to an embodiment of this application.

As shown in FIG. 13, the system for displaying search engine advertising includes a server and a terminal device. The server may be configured to: determine a correlation between search content input by a user and one or more groups of attribute information, where the one or more groups of attribute information correspond to a first advertisement, each group of attribute information includes at least one of the following: a field related to the first advertisement, a descriptive statement of the first advertisement, or a keyword of the first advertisement, and the first advertisement is a to-be-displayed advertisement determined based on the search content; determine, based on the correlation, a target text for displaying, where the target text is a language description of the first advertisement; and send the target text to a terminal device. The terminal device may be configured to display the target text.

The terminal device may be further configured to send, to the server, the search content input by the user. The server may be further configured to send the target text to the terminal device.

As shown in FIG. 13, in a possible implementation, the server may include a search content parsing module, a to-be-pushed advertisement filtering module, a correlation determining module, a target attribute information determining module, and a target text determining module.

The search content parsing module may be configured to parse the search content input by the user to obtain the feature of the search content. For detailed descriptions of the feature of the search content, refer to the foregoing related descriptions. For brevity, details are not described herein again.

The to-be-pushed advertisement filtering module may be configured to determine, based on the search content, one or more advertisements to be pushed to the user from a plurality of pre-stored advertisements. For detailed descriptions, refer to the foregoing related descriptions. For brevity, details are not described herein again.

The correlation determining module may be configured to determine the correlation between the search content and the one or more groups of attribute information corresponding to the first advertisement. For detailed descriptions, refer to the foregoing related descriptions. For brevity, details are not described herein again.

The target attribute information determining module may be configured to determine a target attribute of the first advertisement. For detailed descriptions of the target attribute information, refer to the foregoing related descriptions. For brevity, details are not described herein again.

The target text determining module may be configured to determine a target text of the first advertisement based on the correlation between the search content and the one or more groups of attribute information corresponding to the first advertisement. For detailed descriptions, refer to the foregoing related descriptions. For brevity, details are not described herein again.

An embodiment of this application further provides a server. The server includes corresponding modules configured to perform the steps of the server in any one of the embodiments shown in FIG. 2 or FIG. 11. The modules included in the server may be implemented by using software and/or hardware.

An embodiment of this application further provides a server. The server includes a memory and a processor. The memory is configured to store a program, and the processor is configured to invoke and execute the program, so that the server performs the steps of the server in any one of the embodiments shown in FIG. 2 or FIG. 11.

An embodiment of this application further provides a terminal device. The terminal device includes corresponding modules configured to perform the steps of the terminal device in any one of the embodiments shown in FIG. 2 or FIG. 11. The modules included in the terminal device may be implemented by using software and/or hardware.

An embodiment of this application further provides a terminal device. The terminal device includes a memory and a processor. The memory is configured to store a program, and the processor is configured to invoke and execute the program, so that the terminal device performs the steps of the terminal device in any one of the embodiments shown in FIG. 2 or FIG. 11.

This application further provides a chip system. The chip system includes at least one processor, configured to implement functions in the steps in any one of the embodiments shown in FIG. 2 or FIG. 11.

In a possible design, the chip system further includes a memory, the memory is configured to store program instructions and data, and the memory is located inside or outside the processor.

The chip system may include a chip, or may include a chip and another discrete component.

An embodiment of this application further provides a readable storage medium. The readable storage medium stores a program. When the program is executed by a device, the device is enabled to perform the steps in any one of the embodiments shown in FIG. 2 or FIG. 11.

An embodiment of this application further provides a program product, including a program. When the program is run, a device is enabled to perform the steps in any one of the embodiments shown in FIG. 2 or FIG. 11.

It should be understood that the processor in embodiments of this application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

It may be understood that the memory in embodiments of this application may be a volatile memory or a non-volatile memory, or may include a volatile memory and a non-volatile memory.

Terms such as "unit" and "module" used in this specification may indicate device-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments.

In addition, functional modules in embodiments of this application may be integrated into one processing module, or each of the modules may exist alone physically, or two or more units are integrated into one module.

When the functions are implemented in a form of software functional unit and sold or used as an independent product, the functions may be stored in a readable storage medium. Based on such an understanding, the technical solutions of this application essentially, or the part contributing to the conventional technology, or a part of the technical solutions may be implemented in a form of software product. The software product is stored in a storage medium and includes several instructions for instructing a device to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for displaying search engine advertising, comprising:
determining a correlation between search content input by a user and one or more groups of attribute information, wherein the one or more groups of attribute information correspond to a first advertisement, each group of attribute information comprises at least one of the following: a field related to the first advertisement, a descriptive statement of the first advertisement, or a keyword of the first advertisement, and the first advertisement is a to-be-displayed advertisement determined based on the search content; and
determining, based on the correlation, a target text for displaying, wherein the target text is a language description of the first advertisement.

2. The method according to claim 1, wherein determining the correlation between the search content input by the user and the one or more groups of attribute information comprises:
parsing the search content to obtain a feature of the search content, wherein the feature comprises at least one of the following: a keyword of the search content, a named entity related to the search content, or an intention of the search content; and
determining a correlation between the feature and each of the one or more groups of attribute information.

3. The method according to claim 2, wherein determining, based on the correlation, the target text for displaying comprises:
when a correlation between the search content and at least one of the one or more groups of attribute information is greater than or equal to a preset threshold, determining, as target attribute information, a group of attribute information that has a strongest correlation to the search content and that is in the one or more groups of attribute information; and
determining the target text based on the target attribute information; or
when the correlation between the search content and each group of attribute information is less than the preset threshold, determining, as the target text, a default text corresponding to the first advertisement, wherein the default text corresponding to the first advertisement is predefined.

4. The method according to claim 3, wherein determining the target text based on the target attribute information comprises:
determining, as the target text based on a correspondence between the one or more groups of attribute information and the first advertisement and a correspondence between the one or more groups of attribute information and a plurality of texts, a text that corresponds to the target attribute information and that is in the plurality of texts.

5. The method according to claim 3, wherein determining the target text based on the target attribute information comprises:
determining, as a target advertisement text template based on a correspondence between the one or more groups of attribute information and the first advertisement and a correspondence between the one or more groups of attribute information and a plurality of advertisement text templates, an advertisement text template that corresponds to the target attribute information and that is in the plurality of advertisement text templates; and
generating the target text based on the target attribute information, the feature of the search content, and the target advertisement text template, wherein
the target text comprises at least one word in the target attribute information and/or at least one word in the feature of the search content.

6. The method according to claim 3, wherein determining the target text based on the target attribute information comprises:
inputting the target attribute information and the feature of the search content into a text generation model obtained through pre-training, to generate the target text by using the text generation model.

7. The method according to any one of claims 1 to 6, wherein the method is applied to a server, and after determining, based on the correlation, the target text for displaying, the method further comprises:
sending the target text to a terminal device, wherein the terminal device is configured to display the target text.

8. The method according to any one of claims 1 to 6, wherein the method is applied to a terminal device, and after determining, based on the correlation, the target text for displaying, the method further comprises:
displaying the target text.

9. A method for displaying search engine advertising, wherein the method is applied to a system for displaying search engine advertising, the system for displaying search engine advertising comprises a terminal device and a server, and the method comprises:
determining, by the server, a correlation between search content input by a user and one or more groups of attribute information, wherein the one or more groups of attribute information correspond to a first advertisement, each group of attribute information comprises at least one of the following: a field related to the first advertisement, a descriptive statement of the first advertisement, or a keyword of the first advertisement, and the first advertisement is a to-be-displayed advertisement determined based on the search content;
determining, by the server based on the correlation, a target text for displaying, wherein the target text is a language description of the first advertisement;
sending, by the server, the target text to a terminal device; and
displaying, by the terminal device, the target text.

10. A system for displaying search engine advertising, wherein the system for displaying search engine advertising comprises:
a server, configured to: determine a correlation between search content input by a user and one or more groups of attribute information, wherein the one or more groups of attribute information correspond to a first advertisement, each group of attribute information comprises at least one of the following: a field related to the first advertisement, a descriptive statement of the first advertisement, or a keyword of the first advertisement, and the first advertisement is a to-be-displayed advertisement determined based on the search content; determine, based on the correlation, a target text for displaying, wherein the target text is a language description of the first advertisement; and send the target text to a terminal device; and
the terminal device, configured to display the target text.

11. A server, wherein the server comprises a module configured to implement the method according to any one of claims 1 to 7.

12. A terminal device, comprising a processor and a memory, wherein
the memory is configured to store a program; and
the processor is configured to invoke the program, so that the device is enabled to perform the method according to any one of claims 1 to 6, and 8.

13. A readable storage medium, wherein the readable storage medium stores a program, and when the program is executed, a device is enabled to perform the method according to any one of claims 1 to 8.

14. A program product, comprising a program, wherein when the program is run, a device is enabled to perform the method according to any one of claims 1 to 8.
